# EUROPÄISCHE PATENTSCHRIFT

(11) **EP 2 105 574 B1**
(45) Veröffentlichungstag und Bekanntmachung des Hinweises auf die Patenterteilung: **14.12.2011**
(21) Anmeldenummer: 09154170.6
(22) Anmeldetag: 03.03.2009
(51) Int. Cl.: E21B 10/567, B23B 27/14

(54) **Hartstoffeinsatz**
Hard material insert
Utilisation d'une arête coupante

(30) Priorität: 26.03.2008 DE 102008000840
(43) Veröffentlichungstag der Anmeldung: 30.09.2009
(73) Patentinhaber: HILTI Aktiengesellschaft, 9494 Schaan (LI)
(72) Erfinder: Garcia, Luis Fernando, 7000 Chur (CH); Lammer, Alfred, 8887 Mels (CH); Bohn, Klaus-Peter, 9473 Gams (CH); Cramer, Till, 9473 Gams (CH); Mugg, Peter, 6714 Nüziders (AT); Moseley, Steven, 6800 Feldkirch-Tisis (AT)

(56) Entgegenhaltungen:
- EP-A- 1 388 641
- WO-A-2007/038208
- US-A- 5 597 272
- US-A1- 2005 254 908
- US-A1- 2006 032 677

## Beschreibung

Die Erfindung betrifft einen Hartstoffeinsatz für ein Werkzeug, der segmentartig ausgebildet ist und eine flache, polykristaline Diamantschicht aufweist, welche in einer Schichtebene eine Hauptschneide mit einer Mittellinie und eine der Hauptschneide gegenüberliegende Ansatzkante aufweist, wobei die Hauptschneide in der Schichtebene zwei nach aussen hin positiv gekrümmte Schneidenabschnitte und einen die Schneidenabschnitte verbindenden Übergangsbereich aufweist. Weiter betrifft die Erfindung eine Bohrkrone mit einem derartigen Hartstoffeinsatz.

Derartige Hartstoffeinsätze werden an Werkzeugen, wie z. B. Bohrern, Bohrkronen oder Trennscheiben vorgesehen, mit denen mineralische Untergründe, wie z. B. Beton, Gestein oder Mauerwerk bearbeitet werden.

Aus der EP 1 388 641 A1 ist ein Hartstoffeinsatz für ein Werkzeug bekannt, der segmentartig ausgebildet ist und eine flache, polykristaline Diamantschicht aufweist, welche in einer Schichtebene eine Hauptschneide und eine der Hauptschneide gegenüberliegende, zumindest bereichsweise gerade Ansatzkante aufweist. Infolge der abgerundeten Übergänge der Hauptschneide werden Spannungsüberhöhungen durch Punktlasten und die Risswahrscheinlichkeit in der Lötschicht zwischen dem Werkzeug und der Ansatzkante des Hartstoffeinsatzes reduziert. Somit steigen die Belastbarkeit und die Gebrauchsdauer des Hartstoffeinsatzes. Es besteht jedoch weiterhin ein Bedürfnis, einen derartigen Hartstoffeinsatz z. B. bezüglich seiner Abbaueffizienz zu verbessern.

Aus WO 2007/038208 A1, dass als nächetliegender Stand der Technik zubetrachten ist, ist ein segmentartig ausgebildeter Hartstoffeinsatz für ein Werkzeug bekannt, der eine Hauptschneide und eine der Hauptschneide gegenüberliegende Ansatzkante aufweist. Die Hauptschneide besteht aus einem ersten und zweiten Schneidenabschnitt, die positiv gekrümmt sind und durch einen Übergangsbereich verbunden sind. Der Übergangsbereich ist als Gerade ausgebildet und zwischen dem Übergangsbereich und den Schneidenabschnitt entsteht jeweils ein Knick, an dem es zu Spannungsüberhöhungen kommen kann.

Aufgabe der Erfindung ist es, einen Hartstoffeinsatz für ein Werkzeug zu schaffen, der neben einer hohen Belastbarkeit eine verbesserte Abbaueffizienz aufweist.

Die Aufgabe ist durch die Merkmale der unabhängigen Ansprüche gelöst. Vorteilhafte Weiterbildungen sind in den Unteransprüchen dargelegt.

Gemäss der Erfindung ist der Übergangsbereich nach aussen hin konkav gekrümmt und glatt verlaufend ausgebildet und der Scheitelpunkt des Übergangsbereichs liegt auf der Mittellinie der Hauptschneide, wobei der eine Schneidenabschnitt zumindest bereichsweise in einem ersten Radius und der andere Schneidenabschnitt zumindest bereichsweise in einem zweiten Radius verlaufen, die in Bezug auf die gegenüberliegende Ansatzkante die gleiche Krümmungsrichtung aufweisen, sowie der Übergangsbereich zumindest bereichsweise in einem gegensinnig zu den ersten und zweiten Radien der Schneidenabschnitte gekrümmten dritten Radius verläuft.

Unter nach aussen hin wird in diesem Zusammenhang zur Umgebung hin verstanden. Unter (mathematisch) glatt verlaufend wird ein Verlauf des Übergangsbereichs mit Radien verstanden, ohne dass Sprünge, Kerben oder Absätze in dem Verlauf vorhanden sind. Die Hauptschneide des erfindungsgemässen Hartstoffeinsatzes weist in der Schichtebene eine geschwungene Ausgestaltung mit zwei kuppenförmigen Schneidenabschnitten und mit dazwischen einer muldenförmig verlaufenden Vertiefung auf. Von der gegenüberliegenden Ansatzkante aus gesehen, stehen die beiden, in der Schichtebene zueinander beabstandeten Schneidenabschnitte der Hauptschneide vor und bilden zwei Angriffspunkte, welche im Betrieb eines Werkzeuges mit derartigen Hartstoffeinsätzen gleichzeitig in den Untergrund eindringen. Die Scheitelpunkte der beiden Schneidenabschnitte liegen vorteilhaft im Wesentlichen auf einer Höhe in Bezug auf eine senkrecht zur Mittellinie der Hauptschneide verlaufenden Linie. Beim Bearbeiten des Untergrundes werden gleichzeitig zwei Bruchzonen erzeugt, wobei sich die im Untergrund wirkenden Abbaukräfte überlagern, wodurch die Abbaueffizienz massgeblich gegenüber den bekannten Lösungen ohne eine Erhöhung einer von einem Werkzeuggerät eingebrachten Energie verbessert ist. Mit den Radien der Schneidenabschnitte und des Übergangsbereichs lässt sich das Schneidverhalten einfach und zuverlässig vorteilhaft beeinflussen.

Vorzugsweise sind die Schneidenabschnitte der Hauptschneide an einem Element vorgesehen, was eine einfache Fertigung des Hartstoffeinsatzes und eine einfache Anordnung desselben an einem Werkzeug ermöglicht.

Bevorzugt ist der Hartstoffeinsatz in der Schichtebene zur Ansatzkante hin tailliert. Der Hartstoffeinsatz weist senkrecht zu einer Mittellinie der Hauptschneide an der Ansatzkante eine geringere Erstreckung als im Bereich der Schneidenabschnitte auf. Damit wird beim Bearbeiten des Untergrundes zur Ansatzkante hin neben den Seitenrändern des Hartstoffeinsatzes ein Freiraum geschaffen, in dem abgebautes Untergrundmaterial aufnehmbar ist und der ein Verklemmen des Werkzeuges im Untergrund weitgehend verhindert. Die Seitenränder des Hartstoffeinsatzes verlaufen vorteilhaft in einer geschwungenen, (mathematisch) glatt verlaufenden Linie, wodurch Spannungsspitzen infolge Diskontinuitäten im Verlauf vermieden werden.

Vorzugsweise ist der Hartstoffeinsatz zu einer Mittellinie der Hauptschneide spiegelsymmetrisch, wodurch beide Schneidenabschnitte die gleiche Ausgestaltung aufweisen. Dies gewährleistet ein vorteilhaftes Schneidverhalten des Hartstoffeinsatzes im Untergrund sowie eine einfache Montage direkt oder in einer Ausnehmung an einem Tragkörper eines Werkzeuges. Unter Mittellinie wird eine gedachte Linie verstanden, welche mittig der Hauptschneide liegt und in Richtung der Ansatzkante verläuft.

Vorzugsweise ist der erste Radius des einen Schneidenabschnitts gleich dem zweiten Radius des anderen Schneidenabschnitts, womit ein vorteilhaftes Schneidverhalten infolge der gleichartigen Wirkung der beiden Schneidenabschnitte im Untergrund gewährleistet wird.

Bevorzugt entspricht der Abstand der Scheitelpunkte der Schneidenabschnitte zueinander dem 1- bis 14-fachen, vorzugsweise dem 1- bis 5-fachen, des Radius eines der Schneidenabschnitte. Überraschenderweise hat sich gezeigt, dass mit einer derart ausgestalteten Hauptschneide eine vorteilhafte Überlagerung der von den beiden Schneidenabschnitten in den Untergrund eingebrachten Schneidkräfte und damit eine hohe Abbauleistung gewährleistet ist, ohne dass dabei die Risswahrscheinlichkeit im Hartstoffeinsatz gesteigert wird.

Vorzugsweise entspricht der Radius eines der Schneidenabschnitte dem 0.8- bis 10-fachen, vorzugsweise dem 1- bis 5-fachen, des Radius des Übergangsbereichs, womit eine Risswahrscheinlichkeit im Hartstoffeinsatz während dessen Gebrauchs weitgehend ausgeschlossen wird.

Bevorzugt entspricht der Radius eines der Schneidenabschnitte dem 0.5- bis 2.5-fachen eines in Richtung der Mittellinie der Hauptschneide gemessenen Abstandes zwischen dem

Scheitelpunkt des Übergangsbereichs und zumindest einem der Scheitelpunkte der Schneidenabschnitte. Der genannte Abstand zwischen dem Scheitelpunkt des Übergangsbereichs und den Scheitelpunkten der Schneidenabschnitte ist vorteilhaft entsprechend dem Penetrationsmass gewählt, das der Eindringtiefe des Werkzeuges bei einer Umdrehung des Werkzeuges entspricht.

Eine Bohrkrone weist vorteilhaft mehrere erfindungsgemässe Hartstoffeinsätze auf, wobei die Bohreffektivität gesteigert ist. Zusätzlich wird die Gebrauchsdauer der Bohrkrone verbessert, da eine grössere Menge an Material abgebaut wird, bevor der Hartstoffeinsatz verschlissen ist.

Die Erfindung wird nachstehend anhand von Ausführungsbeispielen näher erläutert. Es zeigen:
- Fig. 1: Ein erstes Ausführungsbeispiel eines Hartstoffeinsatzes in einer perspektivischen Darstellung;
- Fig. 2: den in Fig. 1 dargestellten Hartstoffeinsatz in einer Ansicht;
- Fig. 3: ein zweites Ausführungsbeispiel eines Hartstoffeinsatzes in einer Ansicht;
- Fig. 4: eine Bohrkrone mit Hartstoffeinsatzen; und
- Fig. 5: eine Detailensicht gem. Linie V-V in Fig. 4 auf einen Hartstoffeinsatz.

Grundsätzlich sind in den Figuren gleiche Teile mit den gleichen Bezugszeichen versehen.

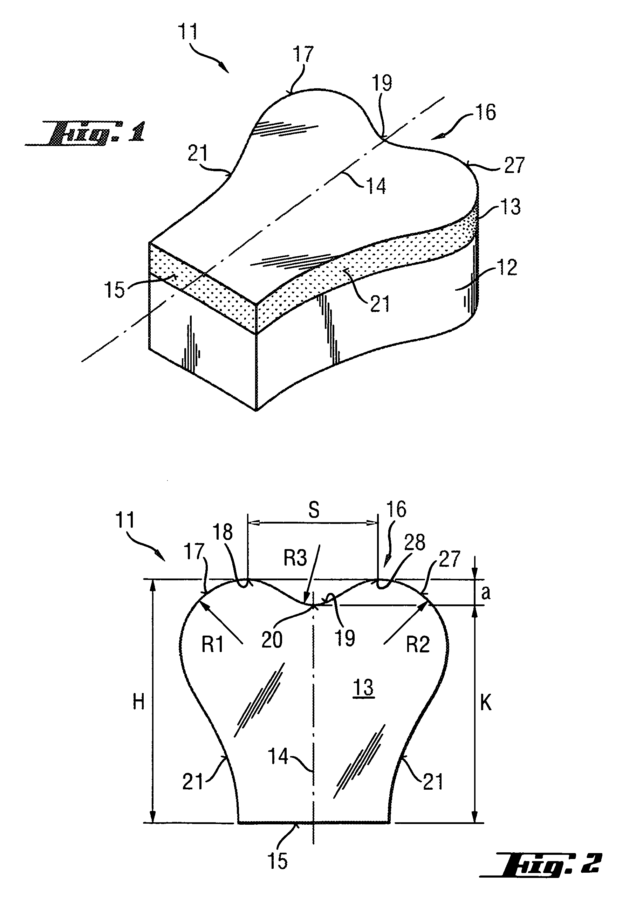

Der in den Figuren 1 und 2 dargestellte Hartstoffeinsatz 11 für ein Werkzeug ist segmentartig ausgebildet und weist eine Trägerschicht 12, beispielsweise aus Hartmetall, und eine flache, polykristaline Diamantschicht 13 auf. Die flache, polykristaline Diamantschicht 13 weist in einer Schichtebene eine in verschiedenen Radien verlaufende Hauptschneide 16 mit einer Mittellinie 14 und eine gegenüberliegende, zumindest bereichsweise gerade Ansatzkante 15 auf.

Die Hauptschneide 16 weist in der Schichtebene zwei nach aussen hin konvex verlaufende (positiv gekrümmte) Schneidenabschnitte 17, 27 und einen die Schneidenabschnitte 17 und 27 verbindenden, nach aussen hin konkav gekrümmten und glatt verlaufenden Übergangsbereich 19 auf, dessen Scheitelpunkt 20 auf der Mittellinie 14 der Hauptschneide 16 liegt. Die Schneidenabschnitte 17 und 27 der Hauptschneide 16 sind an einem Element vorgesehen. Der Hartstoffeinsatz 11 ist in der Schichtebene zur Ansatzkante 15 hin tailliert und in Bezug auf die Mittellinie 14 der Hauptschneide 16 spiegelsymmetrisch. Die Übergänge 21 beziehungsweise die Seitenränder des Hartstoffeinsatzes zwischen den Schneidenabschnitten 17, 27 und der Ansatzkante 15 verlaufen in einer geschwungenen Linie, um Spannungsspitzen und daraus resultierende punktuelle Überbelastungen am Hartstoffeinsatz 11 zu vermeiden.

Der eine Schneidenabschnitt 17 der Hauptschneide 16 verläuft bereichsweise in einem Radius R1 und der andere Schneidenabschnitt 27 verläuft bereichsweise in einem Radius R2, die in Bezug auf die gegenüberliegende Ansatzkante 15 gleich ausgerichtet sind. Der Radius R1 des einen Schneidenabschnitts 17 ist gleich dem Radius R2 des anderen Schneidenabschnitts 27. Die Scheitelpunkte 18, 28 der Schneidenabschnitte 17, 27 liegen in Bezug auf eine senkrecht zur Mittellinie 14 der Hauptschneide 16 verlaufenden Linie auf einer Höhe. Die Ansatzkante 15 verläuft in diesem Ausführungsbeispiel der Erfindung parallel zu der vorgenannten Linie, so dass die Scheitelpunkte 18, 28 der Schneidenabschnitte 17, 27 nicht nur in einem Abstand S zueinander sondern auch in gleicher Distanz H zur geraden Ansatzkante 15 angeordnet sind.

Der Übergangsbereich 19 verläuft bereichsweise in einem gegensinnig zu den Radien R1, R2 der Schneidenabschnitte 17, 27 verlaufenden Radius R3. Der Scheitelpunkt 20 des Übergangsbereichs 19 liegt auf der Mittellinie 14 der Hauptschneide 16 und ist in einer Distanz K zur geraden Ansatzkante 15 angeordnet, die kleiner als die Distanz H der Scheitelpunkte 18, 28 der Schneidenabschnitte 17, 27 zur geraden Ansatzkante 15 ist.

Der Abstand S der Scheitelpunkte 18 und 28 der Schneidenabschnitte 17 bzw. 27 entspricht zueinander dem 1- bis 14-fachen, vorzugsweise dem 1- bis 5-fachen, des Radius R1, R2 eines der Schneidenabschnitte 17 bzw. 27. Der Radius R1, R2 eines der Schneidenabschnitte 17 bzw. 27 entspricht dem 0.8- bis 10-fachen, vorzugsweise dem 1- bis 5-fachen, des Radius R3 des Übergangsbereichs 19. Der Radius R1, R2 eines der Schneidenabschnitte 17 bzw. 27 entspricht dem 0.5- bis 2.5-fachen eines in Richtung der Mittellinie 14 der Hauptschneide 16 gemessenen Abstandes a zwischen dem Scheitelpunkt 20 des Übergangsbereichs 19 und zumindest einem der Scheitelpunkte 18 bzw. 28 der Schneidenabschnitte 17 bzw. 27.

In einer vorteilhaften Ausführungsform beträgt der Radius R1 und R2 der Schneidenabschnitte 17 bzw. 18 1 mm bis 5 mm, vorzugsweise 1.1 mm bis 3 mm, der Abstand S der Scheitelpunkte 18, 28 der Schneidenabschnitte 17 und 28 zueinander 1 mm bis 14 mm, vorzugsweise 1.1 mm bis 5 mm und der Radius R2 des Übergangsbereichs 19 0.1 mm bis 4 mm, vorzugsweise 0.2 mm bis 1.5 mm. Der Abstand a zwischen dem Scheitelpunkt 20 des Übergangsbereichs 19 und einem der Scheitelpunkte 18 bzw. 28 der Schneidenabschnitte 17 bzw. 27 beträgt 0.01 mm bis 2 mm, vorzugsweise 0.1 mm bis 1 mm.

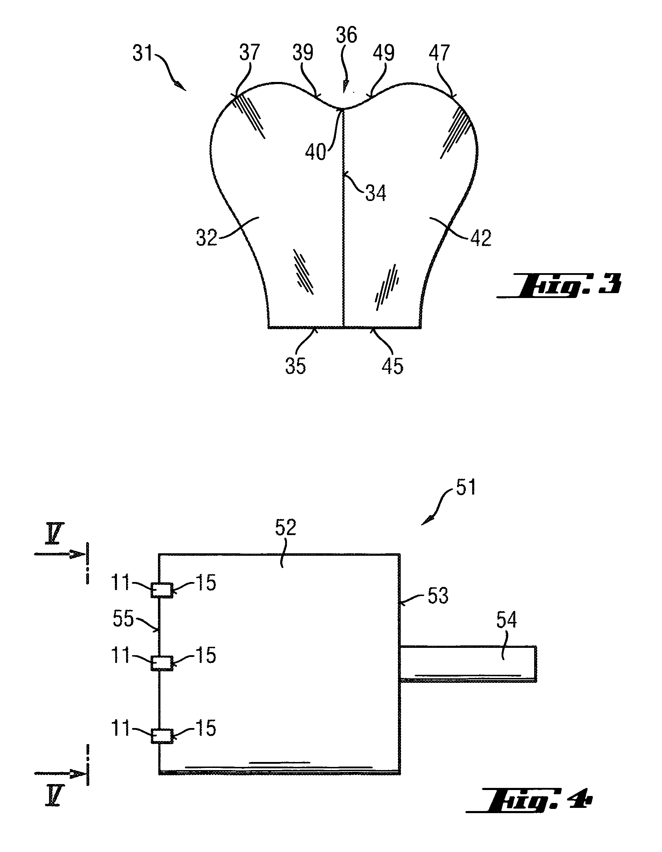

In der Figur 3 ist ein Hartstoffeinsatz 31 gezeigt, der im Unterschied zum Hartstoffeinsatz 11 aus zwei Elementen 32 und 42 zusammengesetzt ist, wobei das Element 32 den Schneidenabschnitt 37 sowie die gerade Ansatzkante 35 und das Element 42 den Schneidenabschnitt 47 sowie die Ansatzkante 45 aufweist. Das Element 42 ist spiegelbildlich zu dem Element 32 ausgebildet, wobei die im zusammengesetzten Zustand gemeinsame Linie die Mittellinie 34 der Hauptschneide 36 des Hartstoffeinsatzes 31 bildet. Der Punkt, an dem der Übergangsbereich 39 des Elementes 32 und der Übergangsbereich 49 des Elementes 42 im zusammengesetzten Zustand des Hartstoffeinsatzes 31 zusammenkommen, ist der Scheitelpunkt 40 des von den Übergangsbereichen 39 und 49 geschaffenen Übergangsbereichs des Hartstoffeinsatzes 31.

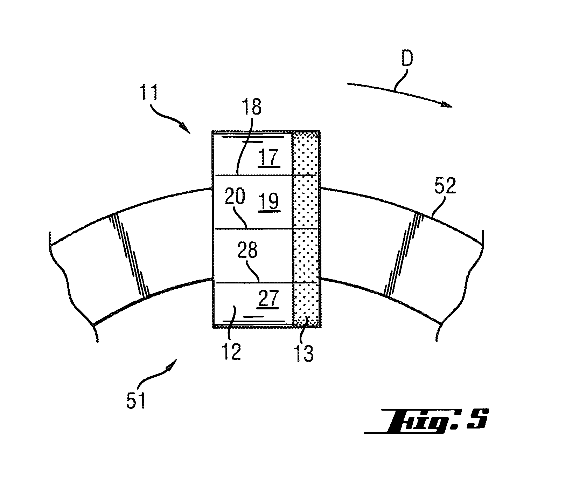

Die in den Figuren 4 und 5 gezeigte Bohrkrone 51 weist einen rohrförmigen Trägerkörper 52 auf, an dessen einem Ende 53 ein Einsteckende 54 zur Anordnung der Bohrkrone 51 an einem hier nicht dargestellten Werkzeuggerät und an einem gegenüberliegenden, freien Ende 55 mehrere, gemäss den Figuren 1 und 2 ausgebildete Hartstoffeinsätze 11 vorgesehen sind. Die Ansatzkante 15 der Hartstoffeinsätze 11 liegt im angeordneten Zustand am freien Ende 55 oder in einer an diesem Ende 55 vorgesehenen Ausnehmung des Tragkörpers an. Anstelle der Hartstoffeinsätze 11 oder in Kombination mit diesen können auch mehrere Hartstoffeinsätze 31 gemäss der Figur 3 an dem freien Ende 55 der Bohrkrone 51 vorgesehen sein.

Die polykristaline Diamantschicht 13 des Hartstoffeinsatzes 11 ist in Drehrichtung D des Tragkörpers 52 der Bohrkrone 51 angeordnet, so dass diese beim Gebrauch der Bohrkrone 51 zuerst am Untergrund angreift.

## Patentansprüche

1. Hartstoffeinsatz für ein Werkzeug, der segmentartig ausgebildet ist und eine flache, polykristaline Diamantschicht (13) aufweist, welche in einer Schichtebene eine Hauptschneide (16; 36) mit einer Mittellinie (14; 34) und eine der Hauptschneide (16; 36) gegenüberliegende Ansatzkante (15; 35, 45) aufweist, wobei die Hauptschneide (16; 36) in der Schichtebene zwei nach aussen hin konvex gekrümmte Schneidenabschnitte (17, 27; 37, 47) und einen die Schneidenabschnitte (17, 27; 37, 47) verbindenden Übergangsbereich (19; 39, 49) aufweist, **dadurch gekennzeichnet, dass** der Übergangsbereich (19; 39, 49) nach aussen hin konkav gekrümmt und glatt verlaufend ausgebildet ist und der Scheitelpunkt (20; 40) des Übergangsbereichs (19; 39, 49) auf der Mittellinie (14; 34) der Hauptschneide (16; 36) liegt, wobei der eine Schneidenabschnitt (17) zumindest bereichsweise in einem ersten Radius (R1) und der andere Schneidenabschnitt (27) zumindest bereichsweise in einem zweiten Radius (R2) verlaufen, die in Bezug auf die gegenüberliegende Ansatzkante (15) die gleiche Krümmungsrichtung aufweisen, sowie der Übergangsbereich (19) zumindest bereichsweise in einem gegensinnig zu den ersten und zweiten Radien (R1, R2) der Schneidenabschnitte (17, 27) gekrümmten dritten Radius (R3) verläuft.

2. Hartstoffeinsatz nach Anspruch 1, **dadurch gekennzeichnet, dass** die Schneidenabschnitte (17, 27) der Hauptschneide (16) an einem Element vorgesehen sind.

3. Hartstoffeinsatz nach Anspruch 1 oder 2, **dadurch gekennzeichnet, dass** der Hartstoffeinsatz (11; 31) in der Schichtebene zur Ansatzkante (15; 35, 45) hin tailliert ist.

4. Hartstoffeinsatz nach einem der Ansprüche 1 bis 3, **dadurch gekennzeichnet, dass** der Hartstoffeinsatz (11; 31) zu der Mittellinie (14; 34) der Hauptschneide (16; 36) spiegelsymmetrisch ist.

5. Hartstoffeinsatz nach einem der Ansprüche 1 bis 4, **dadurch gekennzeichnet, dass** der erste Radius (R1) des einen Schneidenabschnitts (17) gleich dem zweiten Radius (R2) des anderen Schneidenabschnitts (27) ist.

6. Hartstoffeinsatz nach einem der Ansprüche 1 bis 5, **dadurch gekennzeichnet, dass** der Abstand (S) der Scheitelpunkte (18, 28) der Schneidenabschnitte (17, 27) zueinander dem 1- bis 14-fachen, vorzugsweise dem 1- bis 5-fachen, des Radius (R1, R2) eines der Schneidenabschnitte (17, 27) entspricht.

7. Hartstoffeinsatz nach einem der Ansprüche 1 bis 6, **dadurch gekennzeichnet, dass** der Radius (R1, R2) eines der Schneidenabschnitte (17, 27) dem 0.8- bis 10-fachen, vorzugsweise dem 1- bis 5-fachen, des Radius (R3) des Übergangsbereichs (19) entspricht.

8. Hartstoffeinsatz nach einem der Ansprüche 1 bis 7, **dadurch gekennzeichnet, dass** der Radius (R1, R2) eines der Schneidenabschnitte (17, 27) dem 0.5- bis 2.5-fachen eines in Richtung der Mittellinie (14) der Hauptschneide (16) gemessenen Abstandes (a) zwischen dem Scheitelpunkt (20) des Übergangsbereichs (19; 39, 49) und zumindest einem der Scheitelpunkte (18, 28) der Schneidenabschnitte (17, 27) entspricht.

9. Bohrkrone (51) mit zumindest einem Hartstoffeinsatz (11) nach einem der Ansprüche 1 bis 8.

## Claims

1. A hard-material insert for a tool, said insert being formed in segments and comprising a flat, polycrystalline diamond layer (13) which has in one plane a main cutting edge (16; 36) with a centre line (14; 34), as well as an attachment edge (15; 35, 45) located opposite said main cutting edge (16; 36), in which case in the plane of the layer the main cutting edge (16; 36) comprises two outwardly curved, convex cutting edge portions (17, 27; 37, 47) and a transitional region (19; 39, 49) connecting said cutting edge portions (17, 27; 37, 47), **characterized in that** the transitional region (19; 39, 49) extends smoothly so as to curve concavely outwards and the apex (20; 40) of the transitional region (19; 39, 49) lies on the centre line (14; 34) of the main cutting edge (16; 36), one portion (17) of the cutting edge, at least in part, having a first radius (R1) and the other portion (27) of the cutting edge, at least in part, having a second radius (R2), each having the same direction of curve relative to the opposite attachment edge (15), and the transitional region (19), at least in part, having a third radius (R3) curved in opposite direction to the first and second radii (R1, R2) of the portions (17, 27) of the cutting edge.

2. A hard-material insert according to Claim 1, **characterized in that** the portions (17, 27) of the main cutting edge (16) are provided on one element.

3. A hard-material insert according to Claim 1 or 2, **characterized in that** in the plane of the layer the hard-material insert (11; 31) is necked down towards the attachment edge (15; 35, 45).

4. A hard-material insert according to one of Claims 1 to 3, **characterized in that** the hard-material insert (11; 31) is formed so as to be mirror-symmetrical with respect to the centre line (14; 34) of the main cutting edge (16; 36).

5. A hard-material insert according to one of Claims 1 to 4, **characterized in that** the first radius (R1) of one portion (17) of the cutting edge is equal to the second radius (R2) of the other portion (27) of the cutting edge.

6. A hard-material insert according to one of Claims 1 to 5, **characterized in that** the distance (S) between the apexes (18, 28) of the cutting edge portions (17, 27) corresponds to 1 to 14 times, preferably 1 to 5 times, the radius (R1, R2) of one of the portions (17, 27) of the cutting edge.

7. A hard-material insert according to one of Claims 1 to 6, **characterized in that** the radius (R1 R2) of one of the portions (17, 27) of the cutting edge corresponds to 0.8 to 10 times, preferably 1 to 5 times, the radius (R3) of the transitional region (19).

8. A hard-material insert according to one of Claims 1 to 7, **characterized in that** the radius (R1, R2) of one of the portions (17, 27) of the cutting edge corresponds to 0.5 to 2.5 times a distance (a) between the apex (20) of the transitional region (19; 39, 49) and at least one of the apexes (18, 28) of the portions (17, 27) of the cutting edge, when measured in direction of the centre line (14) of the main cutting edge (16).

9. Drill bit or cutter head (51) with at least one hard-material insert (11) according to one of Claims 1 to 8.

## Revendications

1. Insert en matériau dur pour un outil configuré de manière segmentée et incluant une couche de diamant polycristalline plane (13) qui comporte, dans un plan de couche, un tranchant principal (16 ; 36) avec un axe (14 ; 34) et un bord de contact (15 ; 35, 45) dirigé vers le tranchant principal (16 ; 36), dans lequel le tranchant principal (16 ; 36) comporte dans le plan de couche deux sections tranchantes (17, 27 ; 37, 47) incurvées de manière convexe vers l'extérieur et une zone de transition (19 ; 39, 49) reliant les sections tranchantes (17, 27 ; 37, 47), **caractérisé en ce que** la zone de transition (19 ; 39, 49) est incurvée de manière concave vers l'extérieur et est configurée de manière lisse, et le sommet (20 ; 40) de la zone de transition (19 ; 39, 49) se situe sur l'axe (14 ; 34) du tranchant principal (16 ; 36), dans lequel une section tranchante (17) s'étend, au moins dans certaines zones, dans un premier rayon (R1) et l'autre section tranchante (27) s'étend, au moins dans certaines zones, dans un deuxième rayon (R2) qui présentent la même direction de courbure par rapport au bord de contact en vis-à-vis (15), et la zone de transition (19) s'étend, au moins dans certaines zones, dans un troisième rayon (R3) incurvé en sens inverse par rapport aux premier et deuxième rayons (R1, R2) des sections tranchantes (17, 27).

2. Insert en matériau dur selon la revendication 1, **caractérisé en ce que** les sections tranchantes (17, 27) du tranchant principal (16) sont prévues sur un élément.

3. Insert en matériau dur selon la revendication 2, **caractérisé en ce que** l'insert en matériau dur (11 ; 31) est incurvé vers le bord de contact (15 ; 35, 45) dans le plan de couche.

4. Insert en matériau dur selon l'une quelconque des revendications 1 à 3, **caractérisé en ce que** l'insert en matériau dur (11 ; 31) présente une symétrie de miroir par rapport à l'axe (14 ; 34) du tranchant principal (16 ; 36).

5. Insert en matériau dur selon l'une quelconque des revendications 1 à 4, **caractérisé en ce que** le premier rayon (R1) de la première section tranchante (17) est identique au deuxième rayon (R2) de l'autre section tranchante (27).

6. Insert en matériau dur selon l'une quelconque des revendications 1 à 5, **caractérisé en ce que** la distance (S) des sommets (18, 28) des sections tranchantes (17, 27) l'un par rapport à l'autre correspond à 1 à 14 fois, de préférence 1 à 5 fois, le rayon (R1, R2) de l'une des sections tranchantes (17, 27).

7. Insert en matériau dur selon l'une quelconque des revendications 1 à 6, **caractérisé en ce que** le rayon (R1, R2) de l'une des sections tranchantes (17, 27) correspond à 0,8 à 10 fois, de préférence 1 à 5 fois, le rayon (R3) de la zone de transition (19).

8. Insert en matériau dur selon l'une quelconque des revendications 1 à 7, **caractérisé en ce que** le rayon (R1, R2) de l'une des sections tranchantes (17, 27) correspond à 0,5 à 2,5 fois une distance (a) mesurée en direction de l'axe (14) du tranchant principal (16) entre le sommet (20) de la zone de transition (19 ; 39, 49) et au moins un des sommets (18, 28) des sections tranchantes (17, 27).

9. Couronne de carottage (51) comportant au moins un insert en matériau dur (11) selon l'une quelconque des revendications 1 à 8.
